# EUROPEAN PATENT SPECIFICATION

(11) **EP 3 972 197 B1**
(45) Date of publication and mention of the grant of the patent: **22.05.2024**
(21) Application number: 20827843.2
(22) Date of filing: 07.04.2020
(51) Int. Cl.: H04L 41/0806, H04L 41/084, H04L 41/08, H04L 67/133, H04L 67/14

(54) **METHOD AND APPARATUS FOR CUSTOMER PREMISE EQUIPMENT CONFIGURATION MANAGEMENT**
VERFAHREN UND VORRICHTUNG ZUR KONFIGURATIONSVERWALTUNG EINES GERÄTS AUF KUNDENGELÄNDE
PROCÉDÉ ET APPAREIL DE GESTION DE CONFIGURATION D'ÉQUIPEMENT DE LOCAUX D'ABONNÉ

(30) Priority: 21.06.2019 CN 201910541405
(43) Date of publication of application: 23.03.2022
(73) Proprietor: Huawei Technologies Co., Ltd., Longgang District Shenzhen, Guangdong 518129 (CN)
(72) Inventor: WU, Tiejun, Shenzhen, Guangdong 518129 (CN); LIU, Haixing, Shenzhen, Guangdong 518129 (CN); LUO, Guangrui, Shenzhen, Guangdong 518129 (CN)
(74) Representative: Maiwald GmbH
(86) International application number: PCT/CN2020/083559
(87) International publication number: WO 2020/253330

(56) References cited:
- EP-A1- 2 228 944
- EP-A1- 2 383 933
- EP-A1- 2 608 452
- WO-A1-2016/193118
- CN-A- 101 667 948
- CN-A- 101 783 736
- CN-A- 109 151 025
- "Remote management of CPE over broadband networks - CPE WAN management protocol (CWMP); G.9980 (11/12)", ITU-T STANDARD, INTERNATIONAL TELECOMMUNICATION UNION, GENEVA ; CH, no. G.9980 (11/12), 23 November 2012 (2012-11-23), pages 1-30, XP017578106, [retrieved on 2013-04-11]

## Description

### TECHNICAL FIELD

This application relates to the field of optical network communication, and more specifically, to a customer premises equipment configuration management method and apparatus.

### BACKGROUND

In a conventional solution, Broadband Forum defines, in a TR069 protocol, a framework for auto-configuration and remote management of optical terminals based on a customer premises equipment (CPE) wide area network management protocol (CWMP). It is further defined in the protocol that a data model for interaction between a CPE and an auto-configuration server (ACS) is in a one-to-one correspondence, that is, each CPE may be uniquely configured with an address of one ACS and communicate with the ACS. For example, configuration management of one CPE can be performed by only one ACS at a time point, and one CPE can interact with only one ACS at a time point.
European patent application EP 2 608 452 A1 discloses a customer premises equipment device that is capable of communicating with a first auto-configuration server and a second auto-configuration server.
European patent application EP 2 383 933 A1 discloses a method, an apparatus and a communication system that enables a terminal to be managed by multiple servers.

However, with the continuous expansion of home network services, the current mode in which one CPE can be managed by only one ACS cannot meet actual service requirements. In other words, in the conventional solution, data processing efficiency is relatively low.

### SUMMARY

This application provides a method and an apparatus for processing data in parallel, to improve data processing efficiency.

According to a first aspect, according to claim 1, a CPE configuration management method is provided, including: A CPE establishes a session connection to a first ACS, and receives first configuration information sent by the first ACS, where the first configuration information is a parameter configured by the first ACS based on a first data model. The CPE establishes a session connection to a second ACS, and receives second configuration information sent by the second ACS, where the second configuration information is a parameter configured by the second ACS based on a second data model. The CPE performs configuration management operations of the first configuration information and the second configuration information.

The CPE stores information about the first ACS and information about the second ACS. The information about the first ACS and the information about the second ACS are, for example, an identifier of the first ACS and an identifier of the second ACS. The information about the first ACS and the information about the second ACS may be manually configured, or may be configured by another ACS. Because the CPE is preset with the information about the first ACS and the information about the second ACS, the CPE can establish sessions with the first ACS and the second ACS, and simultaneously process the first configuration information and the second configuration information. Compared with a conventional solution in which only configuration information of one ACS can be processed at a time, a CPE to which the foregoing technical solution is applied can split a complex service into a plurality of sub-services, report the sub-services to one (in this case, the first ACS and the second ACS may be considered as two functional models on one ACS) or more ACSs, and process the plurality of sub-services in parallel, thereby improving processing efficiency.

Optionally, the first configuration information includes role information of the first ACS, the second configuration information includes role information of the second ACS, the role information is used to indicate whether the ACS is a master ACS or a slave ACS, and the method further includes: The CPE receives the first configuration information from the first ACS. The CPE receives the second configuration information from the second ACS. The CPE preferably processes the first configuration information based on the role information.

Each piece of configuration information includes a master/slave status of an ACS that sends the configuration information. In this way, the CPE can be prevented from determining the master/slave status of the ACS, thereby reducing a communication latency or signaling overheads.

The first ACS is a master ACS, the second ACS is a slave ACS, and before the CPE establishes the session connection to the second ACS, and receives the second configuration information sent by the second ACS, the method further includes: The CPE activates the second ACS based on the first configuration information.

The slave ACS may be activated by the master ACS when necessary, and deactivated by the master ACS when unnecessary. In this way, the CPE can have abundant resources to process the configuration information of the master ACS.

Optionally, the first ACS is a master ACS, the second ACS is a slave ACS, the first configuration information is security configuration information, and the second configuration information is service configuration information.

The CPE can split services to different ACSs for separate configuration management without affecting each other. For example, an operator may split, based on service types and different security levels, different services to different sub-departments or ACSs of sub-operators for configuration management, to meet diversified and complex service configuration management requirements of a current home network.

The first data model is a data model based on a non-TR069 protocol, and the second data model is a data model based on a TR069 protocol.

The master ACS may configure information about the second ACS on the CPE by using a data model of a non-TR069 protocol, so that the CPE can simultaneously interact with a plurality of ACSs. In the foregoing solution, the TR069 protocol does not need to be modified, thereby simplifying a method for interacting with a plurality of ACSs by the CPE.

According to a second aspect, according to claim 4, another CPE configuration management method is provided, including: a first ACS establishes a session connection to a CPE, and sends first configuration information, where the first configuration information is used to configure the CPE to be capable of simultaneously performing configuration management operations of the first ACS and a second ACS, the first ACS is a master ACS, and the second ACS is a slave ACS. The first ACS communicates with the CPE.

The CPE is preset with information about the master ACS, and the master ACS sends information about the second ACS to the CPE, so that the CPE stores the information about the first ACS and the information about the second ACS. In this way, the CPE can establish sessions with the first ACS and the second ACS, and simultaneously process the first configuration information and second configuration information. Compared with a conventional solution in which only configuration information of one ACS can be processed at a time, a CPE to which the foregoing technical solution is applied can split a complex service into a plurality of sub-services, report the sub-services to one (in this case, the first ACS and the second ACS may be considered as two functional models on one ACS) or more ACSs, and process the plurality of sub-services in parallel, thereby improving processing efficiency. The information about the first ACS and the information about the second ACS are, for example, an identifier of the first ACS and an identifier of the second ACS.

Optionally, the first configuration information is security configuration information.

The CPE can split services to different ACSs for separate configuration management without affecting each other. For example, an operator may split, based on service types and different security levels, different services to different sub-departments or ACSs of sub-operators for configuration management, and the master ACS is responsible for a service with a relatively high security requirement, that is, the first configuration information is security configuration information, thereby meeting diversified and complex service configuration management requirements of a current home network.

Optionally, the first data model is a data model based on a non-TR069 protocol.

The master ACS may configure information about the second ACS on the CPE by using a data model of a non-TR069 protocol, so that the CPE can simultaneously interact with a plurality of ACSs. In the foregoing solution, the TR069 protocol does not need to be modified, thereby simplifying a method for interacting with a plurality of ACSs by the CPE.

According to a third aspect, according to claim 7, a CPE configuration management apparatus is provided. The apparatus has functions of implementing the first aspect and the possible implementations.

According to a fourth aspect, according to claim 10, a CPE configuration management apparatus is provided. The apparatus has functions of implementing the second aspect and the possible implementations.

According to a fifth aspect, a CPE configuration management apparatus is provided. The apparatus may be a CPE, or may be a chip in the CPE. The apparatus has a function of implementing the first aspect and various possible implementations of the first aspect. The function may be implemented by hardware, or may be implemented by hardware executing corresponding software. The hardware or the software includes one or more units corresponding to the function.

In a possible design, the apparatus includes a transceiver unit and a processing unit. The transceiver unit may be, for example, at least one of a transceiver, a receiver, or a transmitter. The transceiver unit may include a radio frequency circuit or an antenna. The processing unit may be a processor.

Optionally, the apparatus further includes a storage unit, and the storage unit may be, for example, a memory. When a storage unit is included, the storage unit is configured to store instructions. The processing unit is connected to the storage unit, and the processing unit may execute the instructions stored in the storage unit or instructions from another unit, to enable the apparatus to perform the method in any one of the first aspect or the possible implementations of the first aspect. In this design, the device may be a CPE.

In another possible design, when the apparatus is a chip, the chip includes a transceiver unit and a processing unit. The transceiver unit may be, for example, an input/output interface, a pin, or a circuit on the chip. The processing unit may be, for example, a processor. The processing unit may execute instructions, to enable the apparatus to perform the method in any one of the first aspect or the possible implementations of the first aspect.

Optionally, the processing unit may execute instructions in a storage unit, and the storage unit may be a storage unit, for example, a register or a cache, in the chip. The storage unit may alternatively be located inside a communication device but outside the chip, for example, a read-only memory (ROM) or another type of static storage device that can store static information and instructions, or a random access memory (RAM).

The processor mentioned above may be a general-purpose central processing unit (CPU), a microprocessor, an application-specific integrated circuit (ASIC), or one or more integrated circuits configured to control program execution of the communication method according to the foregoing aspects.

According to a sixth aspect, a CPE configuration management apparatus is provided. The apparatus may be an ACS, or may be a chip in the ACS. The apparatus has a function of implementing the second aspect and various possible implementations of the second aspect. The function may be implemented by hardware, or may be implemented by hardware executing corresponding software. The hardware or the software includes one or more units corresponding to the function.

In a possible design, the apparatus includes a transceiver unit and a processing unit. The transceiver unit may be, for example, at least one of a transceiver, a receiver, or a transmitter. The transceiver unit may include a radio frequency circuit or an antenna. The processing unit may be a processor.

Optionally, the apparatus further includes a storage unit, and the storage unit may be, for example, a memory. When a storage unit is included, the storage unit is configured to store instructions. The processing unit is connected to the storage unit, and the processing unit may execute the instructions stored in the storage unit or instructions from another unit, to enable the apparatus to perform the method in any one of the second aspect or the possible implementations of the second aspect.

In another possible design, when the apparatus is a chip, the chip includes a transceiver unit and a processing unit. The transceiver unit may be, for example, an input/output interface, a pin, or a circuit on the chip. The processing unit may be, for example, a processor. The processing unit may execute instructions, to enable the apparatus to perform the method in any one of the second aspect or the possible implementations of the second aspect.

Optionally, the processing unit may execute instructions in a storage unit, and the storage unit may be a storage unit, for example, a register or a cache, in the chip. The storage unit may alternatively be located inside a communication device but outside the chip, for example, a read-only memory (ROM) or another type of static storage device that can store static information and instructions, or a random access memory (RAM).

The processor mentioned above may be a general-purpose central processing unit (CPU), a microprocessor, an application-specific integrated circuit (ASIC), or one or more integrated circuits configured to control program execution of the communication method according to the foregoing aspects.

According to a seventh aspect, according to claim 14, a computer storage medium is provided. The computer storage medium stores program code, and the program code is used to indicate instructions for performing the method according to any one of the first aspect and the possible implementations of the first aspect.

According to an eighth aspect, according to claim 15, a computer storage medium is provided. The computer storage medium stores program code, and the program code is used to indicate instructions for performing the method according to any one of the second aspect and the possible implementations of the second aspect.

According to a ninth aspect, a computer program product including instructions is provided. When the computer program product runs on a computer, the computer is enabled to perform the method according to any one of the first aspect or the possible implementations of the first aspect.

According to a tenth aspect, a computer program product including instructions is provided. When the computer program product runs on a computer, the computer is enabled to perform the method according to any one of the second aspect or the possible implementations of the second aspect.

According to an eleventh aspect, a communication system is provided according to claim 13.

### BRIEF DESCRIPTION OF DRAWINGS

FIG. 1 is a schematic block diagram of a communication system according to an embodiment of this application;
FIG. 2 is a schematic flowchart of interaction between a CPE and an ACS in a conventional solution;
FIG. 3 is a schematic flowchart of a CPE configuration management method according to this application;
FIG. 4 is a schematic diagram of another CPE configuration management method according to this application;
FIG. 5 is a schematic block diagram of a CPE configuration management apparatus according to this application;
FIG. 6 is a schematic diagram of a structure of another CPE configuration management apparatus according to this application;
FIG. 7 is a schematic block diagram of still another CPE configuration management apparatus according to this application; and
FIG. 8 is a schematic block diagram of still another CPE configuration management apparatus according to this application.

### DESCRIPTION OF EMBODIMENTS

For ease of understanding, related terms in this application are first briefly described.

### TR069:

TR069 is a protocol proposed by digital subscriber line (DSL) Forum, which is a CWMP protocol, and is mainly used to manage user terminals. TR069 defines a network management system structure, including a "management model", an "interaction interface", and a "management parameter", which greatly reduces operation and maintenance costs of network products.

### CWMP protocol:

A simple object access protocol that is easy to extend, maintain, and understand is used to encapsulate exchanged messages, to implement extensible markup language encapsulation and parsing. A data model supported by a CPE is used to manage service functions supported by the CPE, to implement secure and reliable management of CPE services.

### Remote process call (RPC):

RPC is an encapsulation method in a TR069 protocol specification. An RPC instruction may include at least one of: a method used by an ACS to discover capacities of the CPE, a method for obtaining a device parameter name, a method for setting a device parameter, a method for adding an object, a method for deleting an object, a method for uploading a log or configuration of a device, a method for downloading a device version or configuration, a method for restarting a device, a method used by a device to report an uploading or downloading result to a server, a method for restoring a factory reset of a device, or a method used by a device to actively upload a file to a server.

### Data model

The RPC method is used to manage data models.

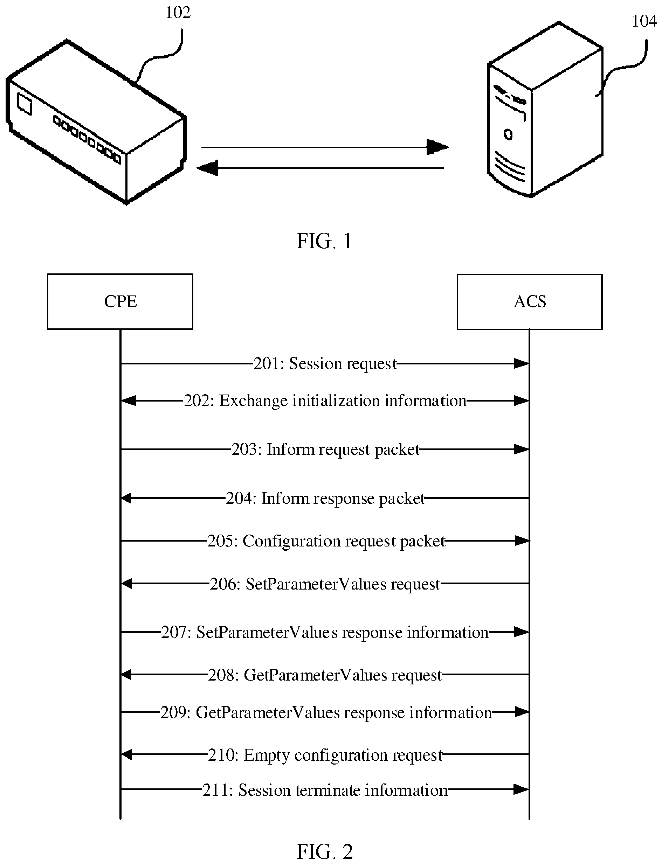

FIG. 1 is a schematic block diagram of a communication system according to an embodiment of this application. As shown in FIG. 1, the communication system includes a CPE 102 and an ACS 104. The ACS 104 may be responsible for managing the CPE 102. An interface between the ACS 104 and the CPE 102 is a southbound interface, and interaction between the CPE 102 and the ACS 104 is based on a uniform resource locator (URL). The URL is a concise representation of a location and an access method of a resource that can be obtained from the Internet, and is an address of a standard Internet resource.

The ACS may generally refer to all management servers. The management server may be implemented by using an independent server or a server cluster including a plurality of servers, and the ACS corresponds to a HeMS. The HeMS may refer to a network management system configured to monitor a small cell.

The CPE may generally refer to a terminal. The terminal in embodiments of this application may be user equipment, an access terminal, a subscriber unit, a subscriber station, a mobile station, a remote station, a remote terminal, a mobile device, a user terminal, a wireless communication device, a user agent, or a user apparatus. The terminal may alternatively be a cellular phone, a cordless phone, a session initiation protocol (SIP) phone, a wireless local loop (WLL) station, a personal digital assistant (PDA), a handheld device having a wireless communication function, a computing device, another processing device connected to a wireless modem, a vehicle-mounted device, a wearable device, a terminal in a 5G network, a terminal in a future evolved public land mobile network (PLMN), or the like. This is not limited in the embodiments of this application.

In the embodiments of this application, the terminal includes a hardware layer, an operating system layer running above the hardware layer, and an application layer running above the operating system layer. The hardware layer includes hardware such as a central processing unit (CPU), a memory management unit (MMU), and a memory (which is also referred to as a main memory). An operating system may be any one or more computer operating systems that implement service processing through a process, for example, a Linux operating system, a Unix operating system, an Android operating system, an iOS operating system, or a Windows operating system. The application layer includes applications such as a browser, an address book, word processing software, and instant messaging software. In addition, a specific structure of an entity for performing a method provided in the embodiments of this application is not particularly limited in the embodiments of this application, provided that the entity can run a program that records code of the method provided in the embodiments of this application to perform communication according to the method provided in the embodiments of this application. For example, the entity for performing the method provided in the embodiments of this application may be an ACS, a CPE, or a functional module that is in an ACS or a CPE and that can invoke and execute the program.

The technical solutions in the embodiments of this application may be applied to various communication systems in which the TR069 protocol is used for interaction.

FIG. 2 is a schematic flowchart of interaction between a CPE and an ACS in a conventional solution.

201: The CPE sends a session request (open connection) to the ACS.

202: The CPE exchanges initialization information, for example, encryption/decryption information, with the ACS.

203: The CPE sends an information request packet to the ACS.

204: The ACS sends an information response packet to the CPE.

205: The CPE sends a configuration request (HTTP POST) packet with an empty payload to the ACS, to allow the ACS to manage the CPE.

206: The ACS sends a SetParameterValues request to the CPE, to configure one or more parameter values (structured parameters or unstructured parameters) of a node corresponding to the CPE.

207: The CPE sends SetParameterValues response information to the ACS.

208: The ACS sends a GetParameterValues request to the CPE, to obtain one or more parameter values of the node corresponding to the CPE.

209: The CPE sends GetParameterValues response information to the ACS.

210: After the ACS sends an HTTP RESPONSE packet with an empty payload to the CPE, a management session process ends.

211: The CPE sends session terminate information to the ACS.

In the conventional solution, the mode in which one CPE can be managed by only one ACS cannot meet actual service requirements. In other words, in the conventional solution, data processing efficiency is relatively low.

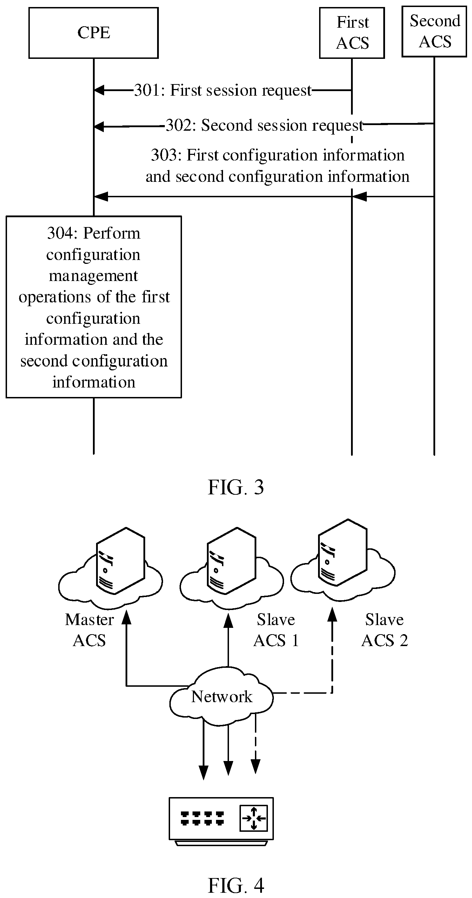

FIG. 3 is a schematic flowchart of a CPE configuration management method according to this application.

301: A CPE sends a first session request to a first ACS. Correspondingly, the first ACS receives the first session request.

302: The CPE sends a second session request to a second ACS. Correspondingly, the second ACS receives the second session request.

It should be noted that the embodiments of this application may be further applied to a communication system including more ACSs. This is not limited in this application.

303: The CPE receives first configuration information sent by the first ACS and second configuration information sent by the second ACS, where the first configuration information is a parameter configured by the first ACS based on a first data model, and the second configuration information is a parameter configured by the second ACS based on a second data model.

For example, the first ACS sends the first configuration information, where the first configuration information is used to configure the CPE to be a CPE capable of processing data of the first ACS; and the second ACS sends the second configuration information, where the second configuration information is used to configure the CPE to be a CPE capable of processing data of the second ACS. In this embodiment of this application, the CPE configures, based on the first configuration information and the second configuration information, the CPE to be a CPE capable of simultaneously processing the data of the first ACS and the second ACS.

The CPE may perform configuration with reference to the configuration information of the first ACS and the second ACS, that is, perform configuration concurrently. Alternatively, the CPE may separately perform configuration for the first ACS and the second ACS.

Optionally, the configuration information is further used to indicate whether a corresponding ACS is a master ACS or a slave ACS.

Each piece of configuration information may include a master/slave status of an ACS that sends the configuration information. For example, the first configuration information indicates whether the first ACS is a master ACS or a slave ACS. The second configuration information indicates whether the second ACS is a master ACS or a slave ACS. The first ACS and the second ACS may agree in advance on which ACS is used as a master ACS, and other ACSs are all slave ACSs. For example, priorities of the ACSs may be set based on a factory reset, and an ACS with a highest priority is a master ACS. In this way, when sending the configuration information to the CPE, the ACS may further indicate whether the ACS is a master ACS or a slave ACS.

It should be understood that, in this embodiment of this application, the slave ACS may also be referred to as a "sub-ACS".

Optionally, the configuration information may indicate, by using a character string, that the corresponding ACS is a master ACS or a slave ACS.

It should be noted that, the master ACS may be referred to as a "common management server", that is, the common management server may be consistent with definition in the TR069 protocol, and the master ACS may manage all content of the CPE. The slave ACS may be referred to as a backup server. By default, only a 1boot event is reported. A status of the slave server is determined. If the master server is normal, the CPE does not accept other operations of the slave server.

Optionally, if the master ACS is online and the slave ACS is offline, the first configuration information is used to configure the CPE to be capable of simultaneously processing the data of the first ACS and the second ACS, that is, the CPE may activate the slave ACS based on the first configuration information.

For example, the slave ACS may send, to the master ACS, related information for configuring the CPE to be capable of processing the data of the slave ACS, and the master ACS sends configuration information to the CPE, so that the CPE can be configured to be a device that simultaneously processes data of the plurality of ACSs.

Optionally, the configuration information sent by the ACS includes a data model, and the data model includes any one of a full data model, a none data model, or a non-data model.

For example, configuration information may include a data model, but different configuration information may include different data models. For example, the data model may be a full data model or a none data model. The full data model may mean that after receiving the configuration information, the CPE reports all supported data models to the ACS. The none data model means supporting only some operational RPC, such as reset and inform, but does not report any data model.

It should be noted that, in this application, a protocol may be extended, and the data model may be extended in the protocol. In addition, to ensure security, when the master ACS learns by query that the CPE has a data model, node information of the slave ACS may be obtained by query. However, an extended slave ACS cannot view node information of the master ACS. For example, the slave ACS can view only configuration information of a local node.

Optionally, the data model in the configuration information sent by the master ACS is a data model based on the TR069 protocol, and the data model in the configuration information sent by the slave ACS is a data model based on a non-TR069 protocol.

Optionally, the configuration information further includes an RPC method.

For example, the RPC method includes a full RPC method or a none RPC method. The full RPC method indicates that all RPC methods supported by the CPE are supported for the ACS. The none RPC method indicates that the CPE does not support any RPC method for the ACS.

Optionally, the CPE receives different configuration information from the first ACS and the second ACS.

For example, some or all of the plurality of ACSs may have different data to be processed. In this case, different ACSs send different configuration information to the CPE. In other words, the CPE can process more different types of data in parallel, thereby further improving data processing efficiency. For example, the first ACS may configure administrator information and some sensitive data information of the CPE, that is, the first configuration information is security configuration information. The second ACS configures and manages only other non-sensitive data of the CPE, that is, the second configuration information is service configuration information.

It should be noted that the first ACS and the second ACS may be isolated or shared on a network. This is not limited in this application.

It should be understood that the first ACS and the second ACS may be physically isolated on a network. For example, a container or a device is used to isolate interaction between different ACSs.

Optionally, the CPE may also determine, based on a network state, whether to switch the master ACS.

For example, the CPE may determine, based on a network state such as communication efficiency between the CPE and the current master ACS, whether the master ACS needs to be replaced. If the network state between the CPE and the current master ACS is less than a preset threshold, the CPE determines to switch the master ACS. If the network state between the CPE and the current master ACS is greater than the preset threshold, the CPE determines that the master ACS does not need to be switched. In this way, communication performance can be improved in this embodiment of this application.

304: The CPE performs configuration management operations of the first configuration information and the second configuration information.

For example, after receiving the first configuration information and the second configuration information, the CPE can simultaneously process data received from the first ACS and the second ACS. Compared with a conventional solution in which only data received from one ACS can be separately processed, communication efficiency is improved in this embodiment of this application.

For example, as shown in FIG. 4, a CPE simultaneously processes data received from a master ACS, a slave ACS 1, and a slave ACS 2.

It should be noted that, that the CPE simultaneously processes data received from the ACSs may mean that the same CPE simultaneously sends inform messages to the plurality of ACSs, or the CPE may simultaneously receive query or management requests sent by the plurality of ACSs.

It should be further noted that, an operator may split, based on service types and different security levels, different services to different ACSs for management, thereby meeting diversified and complex service management of a current home network.

Optionally, step 304 may be specifically as follows: The CPE sends session requests to the plurality of ACSs, and after completing session interaction with each ACS, sends session terminate information to the corresponding ACS. A sending moment of sending a session request to an M^{th} ACS in the plurality of ACSs is earlier than a sending moment of sending session terminate information to an N^{th} ACS, and both M and N are positive integers.

For example, a manner in which the CPE processes data received from an ACS may be a procedure shown in FIG. 2. If the CPE processes data received from a plurality of ACSs, the CPE may start data processing of one ACS before data processing of another ACS is completed. For example, before sending the session terminate information to the N^{th} ACS, the CPE may send the session request to the M^{th} ACS. In other words, a processing procedure in which the CPE processes data of the M^{th} ACS may be interleaved with a processing procedure in which the CPE processes data of the N^{th} ACS, for example, without a specific order. In this way, compared with a conventional solution in which the CPE can send a session request to one ACS only after sending session terminate information to another ACS, communication efficiency is improved in this embodiment of this application.

It should be noted that, the CPE may process, in a partially interleaved or entirely interleaved manner, the data received from the plurality of ACSs. This is not limited in this application.

It should be further noted that, in this embodiment of this application, a start procedure in which the CPE processes the data received from the ACS is sending a session request to the ACS by the CPE. If the start procedure in which the CPE processes the data received from the ACS is another operation, the "sending a session request" needs to be replaced with the "start procedure". Correspondingly, if an end procedure in which the CPE processes the data received from the ACS is not sending session terminate information, the "sending session terminate information" needs to be replaced with the "end procedure".

For example, in a scenario in which the CPE simultaneously communicates with the first ACS and the second ACS, a sending moment at which the CPE sends second session request information to the second ACS is earlier than a sending moment of sending first session terminate information. The first session terminate information is sent after the first ACS completes session interaction with the CPE.

In an embodiment, if an ACS may be divided into functional modules, the plurality of functional modules in the ACS may be considered as the plurality of ACSs, and different functional modules may be used to have different data processing requirements.

Optionally, if each of the plurality of ACSs may be divided into functional modules, system performance can be further improved in this embodiment of this application.

In another embodiment, one CPE is configured as an ACS of another CPE, that is, synchronization of only part of configuration information is supported. In this way, the ACS in this embodiment of this application may also be considered as a CPE, that is, configuration synchronization between CPEs is supported. For some common parameters, configuration performance can be improved more efficiently.

It should be noted that, in this scenario, a model for synchronizing parameters between CPEs needs to be defined, individual parameters need to be delivered by the ACS, and common parameters may be directly synchronized between the CPEs. In addition, the master ACS needs to dynamically deliver configuration parameters of the sub-ACS.

In still another embodiment, the embodiments of this application may be further applied to a home network. A gateway replaces the ACS and delivers configuration to another network device in the home network. That is, the gateway is considered as an ACS, and the another network device in the home network is considered as a CPE. In this way, related devices inside the home network can autonomously synchronize configuration data of the ACS. In addition, an ACS of an operator can manage devices inside the home network in parallel.

It should be noted that, in this scenario, a master ACS of the another device in the home network is filled with an ACS address of the operator, and an extended ACS is filled with an address of the gateway.

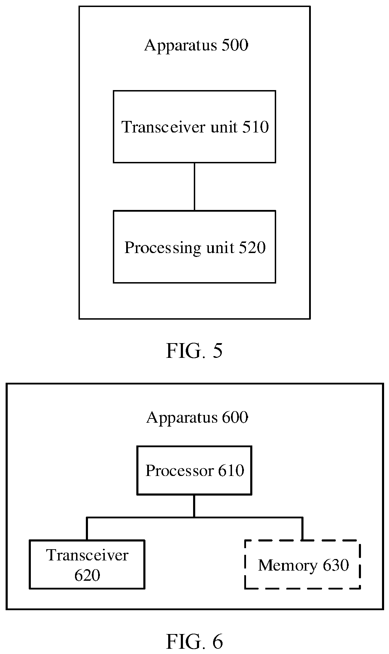

FIG. 5 is a schematic block diagram of a CPE apparatus 500 for configuration management according to this application.

It should be understood that the apparatus 500 may correspond to the CPE shown in FIG. 3, and may have any function of the CPE in the method. The apparatus 500 includes a transceiver unit 510 and a processing unit 520.

The transceiver unit 510 is configured to send a first session request to a first auto-configuration server (ACS).

The transceiver unit 510 is further configured to send a second session request to a second ACS.

The transceiver unit 510 is further configured to receive first configuration information and second configuration information that are delivered by the first ACS and the second ACS, where the first configuration information is a parameter configured by the first ACS based on a first data model, and the second configuration information is a parameter configured by the second ACS based on a second data model.

The processing unit 520 is configured to perform configuration management operations of the first configuration information and the second configuration information.

Optionally, the first configuration information includes role information of the first ACS, the second configuration information includes role information of the second ACS, and the role information is used to indicate whether the ACS is a master ACS or a slave ACS. The transceiver unit 510 is specifically configured to receive the first configuration information from the first ACS, and receive the second configuration information from the second ACS. The processing unit 520 is further configured to preferably process the first configuration information based on the role information.

The first ACS is a master ACS, the second ACS is a slave ACS, and before the apparatus establishes the session connection to the second ACS, and receives the second configuration information sent by the second ACS, the processing unit 520 is further configured to activate the second ACS based on the first configuration information.

FIG. 6 is a schematic diagram of a structure of another CPE configuration management apparatus 600 according to this application. The apparatus 600 may be the CPE shown in FIG. 3. The apparatus may use a hardware architecture shown in FIG. 6. The apparatus may include a processor 610 and a transceiver 620. Optionally, the apparatus may further include a memory 630. The processor 610, the transceiver 620, and the memory 630 communicate with each other through an internal connection path. A related function implemented by the processing unit 520 in FIG. 5 may be implemented by the processor 610, and a related function implemented by the transceiver unit 510 may be implemented by the processor 610 by controlling the transceiver 620.

Optionally, the processor 610 may be a general-purpose central processing unit (CPU), a microprocessor, an application-specific integrated circuit (ASIC), a special-purpose processor, or one or more integrated circuits configured to perform the technical solutions in the embodiments of this application. Alternatively, the processor may be one or more devices, circuits, and/or processing cores configured to process data (for example, computer program instructions). For example, the processor may be a baseband processor or a central processing unit. The baseband processor may be configured to process a communication protocol and communication data. The central processing unit may be configured to control a parallel data processing apparatus, execute a software program, and process data of the software program.

Optionally, the processor 610 may include one or more processors, for example, include one or more central processing units (CPU). When the processor is one CPU, the CPU may be a single-core CPU, or may be a multi-core CPU.

The transceiver 620 is configured to send and receive data and/or signals. The transceiver may include a transmitter and a receiver. The transmitter is configured to send the data and/or the signal, and the receiver is configured to receive the data and/or the signal.

The memory 630 includes but is not limited to a random access memory (RAM), a read-only memory (ROM), an erasable programmable read-only memory (EPROM), and a compact disc read-only memory (CD-ROM). The memory 630 is configured to store related instructions and data.

The memory 630 is configured to store program code and data, and may be a separate device or integrated into the processor 610.

For example, the processor 610 is configured to control the transceiver to perform information transmission with an ACS. For details, refer to the descriptions in the method embodiments. Details are not described herein again.

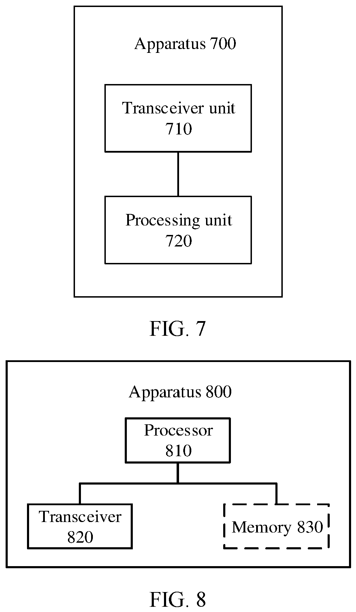

FIG. 7 is a schematic block diagram of still another CPE configuration management apparatus 700 according to this application.

It should be understood that the apparatus 700 may correspond to the ACS in FIG. 3, for example, the first ACS. The device may have any function of the ACS in the method. The apparatus 700 includes a transceiver unit 710 and a processing unit 720.

The transceiver unit 710 establishes a session connection to a CPE, and sends first configuration information, where the first configuration information is used to configure the CPE to be capable of simultaneously performing configuration management operations of the first ACS and a second ACS, an ACS corresponding to the apparatus 700 is a master ACS, and the second ACS is a slave ACS.

The processing unit 720 is configured to communicate with the CPE by using the transceiver unit 710.

FIG. 8 is a schematic diagram of a structure of still another CPE configuration management apparatus 800 according to this application. The apparatus 800 may be the ACS in FIG. 3 and FIG. 4. The apparatus may use a hardware architecture shown in FIG. 8. The apparatus may include a processor 810 and a transceiver 820. Optionally, the apparatus may further include a memory 830. The processor 810, the transceiver 820, and the memory 830 communicate with each other through an internal connection path. A related function implemented by the processing unit 720 in FIG. 7 may be implemented by the processor 810, and a related function implemented by the transceiver unit 710 may be implemented by the processor 810 by controlling the transceiver 820.

Optionally, the processor 810 may be a general-purpose central processing unit (CPU), a microprocessor, an application-specific integrated circuit (ASIC), a special-purpose processor, or one or more integrated circuits configured to perform the technical solutions in the embodiments of this application. Alternatively, the processor may be one or more devices, circuits, and/or processing cores configured to process data (for example, computer program instructions). For example, the processor may be a baseband processor or a central processing unit. The baseband processor may be configured to process a communication protocol and communication data. The central processing unit may be configured to control an information processing apparatus, execute a software program, and process data of the software program.

Optionally, the processor 810 may include one or more processors, for example, include one or more central processing units (CPU). When the processor is one CPU, the CPU may be a single-core CPU, or may be a multi-core CPU.

The transceiver 820 is configured to send and receive data and/or signals. The transceiver may include a transmitter and a receiver. The transmitter is configured to send the data and/or the signal, and the receiver is configured to receive the data and/or the signal.

The memory 830 includes but is not limited to a random access memory (RAM), a read-only memory (ROM), an erasable programmable read-only memory (EPROM), and a compact disc read-only memory (CD-ROM). The memory 830 is configured to store related instructions and data.

The memory 830 is configured to store program code and data, and may be a separate device or integrated into the processor 810.

For example, the processor 810 is configured to control the transceiver to perform information transmission with a CPE. For details, refer to the descriptions in the method embodiments. Details are not described herein again.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are only examples. For example, division into the units is only logical function division, and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a computer software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (ROM), a random access memory (RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A customer premises equipment configuration management method, comprising:
establishing, by a customer premises equipment, CPE (102), a session connection to a first auto-configuration server, ACS (104), wherein the first ACS (104) is a master ACS (104), and receiving first configuration information sent by the first ACS (104), wherein the first configuration information is a parameter configured by the first ACS (104) based on a first data model, wherein the first data model is a data model based on a non-TR069 protocol;
establishing, by the CPE (102), a session connection to a second ACS (104), wherein the second ACS (104) is a slave ACS (104), and receiving second configuration information sent by the second ACS (104), wherein the second configuration information is a parameter configured by the second ACS (104) based on a second data model, wherein the second data model is a data model based on a TR069 protocol; and
performing, by the CPE (102), configuration management operations of the first configuration information and the second configuration information,
**characterized in that**
before the establishing, by the CPE (102), a session connection to a second ACS (104), and receiving second configuration information sent by the second ACS (104), the method further comprises:
activating, by the CPE (102), the second ACS (104) based on the first configuration information.

2. The method according to claim 1, wherein the first configuration information comprises role information of the first ACS (104), the second configuration information comprises role information of the second ACS (104), the role information is used to indicate whether the ACS (104) is a master ACS (104) or a slave ACS (104), and the method further comprises:
receiving, by the CPE (102), the first configuration information from the first ACS (104);
receiving, by the CPE (102), the second configuration information from the second ACS (104); and
processing, by the CPE (102), the first configuration information based on the role information.

3. The method according to any one of claims 1 to 2, wherein the first ACS (104) is a master ACS (104), the second ACS (104) is a slave ACS (104), the first configuration information is security configuration information, and the second configuration information is service configuration information.

4. A customer premises equipment configuration management method, comprising:
establishing, by a first auto-configuration server, ACS (104), a session connection to a customer premises equipment, CPE (102), and sending first configuration information, wherein the first configuration information is a parameter configured by the first ACS based on a first data model and wherein
the first configuration information is used to configure the CPE (102) to be adapted to activate a second ACS (104), to be a device that simultaneously processes data of a plurality of ACSs and to be adapted to simultaneously perform configuration management operations of the first ACS (104) and the second ACS (104), the first ACS (104) is a master ACS (104), and the second ACS (104) is a slave ACS (104); and
communicating, by the first ACS (104), with the CPE (102).

5. The method according to claim 4, wherein the first configuration information is security configuration information.

6. The method according to claim 4 or 5, wherein the first data model is a data model based on a non-TR069 protocol.

7. A customer premises equipment configuration management apparatus (500; 600), comprising a receiving unit and a processing unit (520), wherein
the receiving unit is configured to: establish a session connection to a first auto-configuration server, ACS (104), wherein the first ACS (104) is a master ACS (104), and receive first configuration information sent by the first ACS (104), wherein the first configuration information is a parameter configured by the first ACS (104) based on a first data model, wherein the first data model is a data model based on a non-TR069 protocol;
the receiving unit is further configured to: establish a session connection to a second ACS (104), wherein the second ACS (104) is a slave ACS (104), and receive second configuration information sent by the second ACS (104), wherein the second configuration information is a parameter configured by the second ACS (104) based on a second data model, wherein the second data model is a data model based on a TR069 protocol; and
the processing unit (520) is configured to perform configuration management operations of the first configuration information and the second configuration information,
**characterized in that**:
before the apparatus (500; 600) establishes the session connection to the second ACS (104), and receives the second configuration information sent by the second ACS (104), the processing unit (520) is further configured to:
activate the second ACS (104) based on the first configuration information.

8. The apparatus (500; 600) according to claim 7, wherein the first configuration information comprises role information of the first ACS (104), the second configuration information comprises role information of the second ACS (104), and the role information is used to indicate whether the ACS (104) is a master ACS (104) or a slave ACS (104),
the receiving unit is further configured to receive the first configuration information from the first ACS (104), and receive the second configuration information from the second ACS (104); and
the processing unit (520) is further configured to process the first configuration information based on the role information.

9. The apparatus (500; 600) according to any one of claims 7 to 8, wherein the first ACS (104) is a master ACS (104), the second ACS (104) is a slave ACS (104), the first configuration information is security configuration information, and the second configuration information is service configuration information.

10. A customer premises equipment configuration management apparatus (700; 800), comprising a sending unit and a processing unit (720), wherein
the sending unit is configured to: establish a session connection to a customer premises equipment, CPE (102), and send first configuration information, whereir the first configuration information is a parameter configured by the first ACS based on a first data model and wherein
the first configuration information is used to configure the CPE (102) to be adapted to activate a second ACS (104), to be a device that simultaneously processes data of a plurality of ACSs and to be adapted to simultaneously perform configuration management operations of a first auto-configuration server, ACS (104), and the second ACS (104), the first ACS (104) corresponding to the apparatus (700; 800) is a master ACS (104), and the second ACS (104) is a slave ACS (104); and
the processing unit (720) is configured to communicate with the CPE (102) by using the sending unit.

11. The apparatus (700; 800) according to claim 10, wherein the first configuration information is security configuration information.

12. The apparatus (700; 800) according to claim 10 or 11, wherein the first data model is a data model based on a non-TR069 protocol.

13. A communication system, wherein the communication system comprises the apparatus (500; 600) according to any one of claims 7 to 9 and the apparatus (700; 800) according to any one of claims 10 to 12.

14. A computer-readable storage medium, wherein the computer-readable storage medium stores a computer program; and when the computer program is executed by a processor (610) in a customer premises equipment, CPE (102), the processor (610) is enabled to perform the method according to any one of claims 1 to 3.

15. A computer-readable storage medium, wherein the computer-readable storage medium stores a computer program; and when the computer program is executed by a processor (810) in an auto-configuration server, ACS (104), the processor (810) is enabled to perform the method according to any one of claims 4 to 6.

## Patentansprüche

1. Verfahren zur Konfigurationsverwaltung eines Teilnehmerendgeräts, umfassend:
Herstellen, durch ein Teilnehmerendgerät, CPE (102), einer Sitzungsverbindung mit einem ersten Autokonfigurationsserver, ACS (104), wobei der erste ACS (104) ein Master-ACS (104) ist, und Empfangen erster Konfigurationsinformationen, die durch den ersten ACS (104) gesandt werden, wobei die ersten Konfigurationsinformationen ein Parameter sind, der durch den ersten ACS (104) basierend auf einem ersten Datenmodell konfiguriert wird, wobei das erste Datenmodell ein Datenmodell ist, das auf einem Nicht-TR069-Protokoll basiert;
Herstellen, durch das CPE (102), einer Sitzungsverbindung mit einem zweiten ACS (104), wobei der zweite ACS (104) ein Slave-ACS (104) ist, und Empfangen zweiter Konfigurationsinformationen, die durch den zweiten ACS (104) gesandt werden, wobei die zweiten Konfigurationsinformationen ein Parameter sind, der durch den zweiten ACS (104) basierend auf einem zweiten Datenmodell konfiguriert wird, wobei das zweite Datenmodell ein Datenmodell ist, das auf einem TR069-Protokoll basiert; und
Durchführen, durch das CPE (102), von Konfigurationsverwaltungsvorgängen der ersten Konfigurationsinformationen und der zweiten Konfigurationsinformationen,
**dadurch gekennzeichnet, dass**
vor dem Herstellen, durch das CPE (102), einer Sitzungsverbindung mit einem zweiten ACS (104) und dem Empfangen zweiter Konfigurationsinformationen, die durch den zweiten ACS (104) gesandt werden, das Verfahren ferner Folgendes umfasst:
Aktivieren, durch das CPE (102), des zweiten ACS (104) basierend auf den ersten Konfigurationsinformationen.

2. Verfahren nach Anspruch 1, wobei die ersten Konfigurationsinformationen Rolleninformationen des ersten ACS (104) umfassen, die zweiten Konfigurationsinformationen Rolleninformationen des zweiten ACS (104) umfassen und die Rolleninformationen dazu verwendet werden, anzugeben, ob der ACS (104) ein Master-ACS (104) oder ein Slave-ACS (104) ist, und das Verfahren ferner Folgendes umfasst:
Empfangen, durch das CPE (102), der ersten Konfigurationsinformationen von dem ersten ACS (104);
Empfangen, durch das CPE (102), der zweiten Konfigurationsinformationen von dem zweiten ACS (104); und
Verarbeiten, durch das CPE (102), der ersten Konfigurationsinformationen basierend auf den Rolleninformationen.

3. Verfahren nach einem der Ansprüche 1 bis 2, wobei der erste ACS (104) ein Master-ACS (104) ist, der zweite ACS (104) ein Slave-ACS (104) ist, die ersten Konfigurationsinformationen Sicherheitskonfigurationsinformationen sind und die zweiten Konfigurationsinformationen Dienstkonfigurationsinformationen sind.

4. Verfahren zur Konfigurationsverwaltung eines Teilnehmerendgeräts, umfassend:
Herstellen, durch einen ersten Autokonfigurationsserver, ACS (104), einer Sitzungsverbindung mit einem Teilnehmerendgerät, CPE (102), und Senden erster Konfigurationsinformationen,
wobei die ersten Konfigurationsinformationen ein Parameter sind, der durch den ersten ACS basierend auf einem ersten Datenmodell konfiguriert wird, und wobei die ersten Konfigurationsinformationen dazu verwendet werden, das CPE (102) dazu zu konfigurieren, dazu ausgelegt zu sein, einen zweiten ACS (104) zu aktivieren, eine Vorrichtung zu sein, die gleichzeitig Daten einer Vielzahl von ACSs verarbeitet, und dazu ausgelegt zu sein, gleichzeitig Konfigurationsverwaltungsvorgänge des ersten ACS (104) und des zweiten ACS (104) durchzuführen, der erste ACS (104) ein Master-ACS (104) ist und der zweite ACS (104) ein Slave-ACS (104) ist; und
Kommunizieren, durch den ersten ACS (104), mit dem CPE (102).

5. Verfahren nach Anspruch 4, wobei die ersten Konfigurationsinformationen Sicherheitskonfigurationsinformationen sind.

6. Verfahren nach Anspruch 4 oder 5, wobei das erste Datenmodell ein Datenmodell ist, das auf einem Nicht-TR069-Protokoll basiert.

7. Einrichtung (500; 600) zur Konfigurationsverwaltung eines Teilnehmerendgeräts, eine Empfangseinheit und eine Verarbeitungseinheit (520) umfassend, wobei
die Empfangseinheit zu Folgendem konfiguriert ist: Herstellen einer Sitzungsverbindung mit einem ersten Autokonfigurationsserver, ACS (104), wobei der erste ACS (104) ein Master-ACS (104) ist, und Empfangen erster Konfigurationsinformationen, die durch den ersten ACS (104) gesandt werden, wobei die ersten Konfigurationsinformationen ein Parameter sind, der durch den ersten ACS (104) basierend auf einem ersten Datenmodell konfiguriert wird, wobei das erste Datenmodell ein Datenmodell ist, das auf einem Nicht-TR069-Protokoll basiert;
die Empfangseinheit ferner zu Folgendem konfiguriert ist: Herstellen einer Sitzungsverbindung mit einem zweiten ACS (104), wobei der zweite ACS (104) ein Slave-ACS (104) ist, und Empfangen zweiter Konfigurationsinformationen, die durch den zweiten ACS (104) gesandt werden, wobei die zweiten Konfigurationsinformationen ein Parameter sind, der durch den zweiten ACS (104) basierend auf einem zweiten Datenmodell konfiguriert wird, wobei das zweite Datenmodell ein Datenmodell ist, das auf einem TR069-Protokoll basiert; und
die Verarbeitungseinheit (520) dazu konfiguriert ist, Konfigurationsverwaltungsvorgänge der ersten Konfigurationsinformationen und der zweiten Konfigurationsinformationen durchzuführen,
**dadurch gekennzeichnet, dass**:
bevor die Einrichtung (500; 600) die Sitzungsverbindung mit dem zweiten ACS (104) herstellt und die zweiten Konfigurationsinformationen, die durch den zweiten ACS (104) gesandt werden, empfängt, die Verarbeitungseinheit (520) ferner zu Folgendem konfiguriert ist:
Aktivieren des zweiten ACS (104) basierend auf den ersten Konfigurationsinformationen.

8. Einrichtung (500; 600) nach Anspruch 7, wobei die ersten Konfigurationsinformationen Rolleninformationen des ersten ACS (104) umfassen, die zweiten Konfigurationsinformationen Rolleninformationen des zweiten ACS (104) umfassen und die Rolleninformationen dazu verwendet werden, anzugeben, ob der ACS (104) ein Master-ACS (104) oder ein Slave-ACS (104) ist, die Empfangseinheit ferner dazu konfiguriert ist, die ersten Konfigurationsinformationen von dem ersten ACS (104) zu empfangen und die zweiten Konfigurationsinformationen von dem zweiten ACS (104) zu empfangen; und
die Verarbeitungseinheit (520) ferner dazu konfiguriert ist, die ersten Konfigurationsinformationen basierend auf den Rolleninformationen zu verarbeiten.

9. Einrichtung (500; 600) nach einem der Ansprüche 7 bis 8, wobei der erste ACS (104) ein Master-ACS (104) ist, der zweite ACS (104) ein Slave-ACS (104) ist, die ersten Konfigurationsinformationen Sicherheitskonfigurationsinformationen sind und die zweiten Konfigurationsinformationen Dienstkonfigurationsinformationen sind.

10. Einrichtung (700; 800) zur Konfigurationsverwaltung eines Teilnehmerendgeräts, eine Sendeeinheit und eine Verarbeitungseinheit (720) umfassend, wobei
die Sendeeinheit zu Folgendem konfiguriert ist: Herstellen einer Sitzungsverbindung mit einem Teilnehmerendgerät, CPE (102), und Senden erster Konfigurationsinformationen, wobei die ersten Konfigurationsinformationen ein Parameter sind, der durch den ersten ACS basierend auf einem ersten Datenmodell konfiguriert wird, und wobei die ersten Konfigurationsinformationen dazu verwendet werden, das CPE (102) dazu zu konfigurieren, dazu ausgelegt zu sein, einen zweiten ACS (104) zu aktivieren, eine Vorrichtung zu sein, die gleichzeitig Daten einer Vielzahl von ACSs verarbeitet, und dazu ausgelegt zu sein, gleichzeitig Konfigurationsverwaltungsvorgänge eines ersten Autokonfigurationsservers, ACS (104), und des zweiten ACS (104) durchzuführen, der erste ACS (104), der der Einrichtung (700; 800) entspricht, ein Master-ACS (104) ist und der zweite ACS (104) ein Slave-ACS (104) ist; und
die Verarbeitungseinheit (720) dazu konfiguriert ist, unter Verwendung der Sendeeinheit mit dem CPE (102) zu kommunizieren.

11. Einrichtung (700; 800) nach Anspruch 10, wobei die ersten Konfigurationsinformationen Sicherheitskonfigurationsinformationen sind.

12. Einrichtung (700; 800) nach Anspruch 10 oder 11, wobei das erste Datenmodell ein Datenmodell ist, das auf einem Nicht-TR069-Protokoll basiert.

13. Kommunikationssystem, wobei das Kommunikationssystem die Einrichtung (500; 600) nach einem der Ansprüche 7 bis 9 und die Einrichtung (700; 800) nach einem der Ansprüche 10 bis 12 umfasst.

14. Computerlesbares Speichermedium, wobei das computerlesbare Speichermedium ein Computerprogramm speichert; und wenn das Computerprogramm durch einen Prozessor (610) in einem Teilnehmerendgerät, CPE (102), ausgeführt wird, dem Prozessor (610) ermöglicht wird, das Verfahren nach einem der Ansprüche 1 bis 3 durchzuführen.

15. Computerlesbares Speichermedium, wobei das computerlesbare Speichermedium ein Computerprogramm speichert; und wenn das Computerprogramm durch einen Prozessor (810) in einem Autokonfigurationsserver, ACS (104), ausgeführt wird, dem Prozessor (810) ermöglicht wird, das Verfahren nach einem der Ansprüche 4 bis 6 durchzuführen.

## Revendications

1. Procédé de gestion de configuration d'équipement de locaux d'abonné, comprenant :
l'établissement, par un équipement de locaux d'abonné, CPE (102), d'une connexion de session à un premier serveur de configuration automatique, ACS (104), dans lequel le premier ACS (104) est un ACS maître (104), et la réception de premières informations de configuration envoyées par le premier ACS (104),
dans lequel les premières informations de configuration sont un paramètre configuré par le premier ACS (104) sur la base d'un premier modèle de données, dans lequel le premier modèle de données est un modèle de données basé sur un protocole non TR069 ;
l'établissement, par le CPE (102), d'une connexion de session à un second ACS (104), dans lequel le second ACS (104) est un ACS esclave (104), et la réception de secondes informations de configuration envoyées par le second ACS (104), dans lequel les secondes informations de configuration sont un paramètre configuré par le second ACS (104) sur la base d'un second modèle de données, dans lequel le second modèle de données est un modèle de données basé sur un protocole TR069 ; et
la réalisation, par le CPE (102), d'opérations de gestion de configuration des premières informations de configuration et des secondes informations de configuration,
**caractérisé en ce que**
avant l'établissement, par le CPE (102), d'une connexion de session à un second ACS (104), et la réception de secondes informations de configuration envoyées par le second ACS (104),
le procédé comprend en outre :
l'activation, par le CPE (102), du second ACS (104) sur la base des premières informations de configuration.

2. Procédé selon la revendication 1, dans lequel les premières informations de configuration comprennent des informations de rôle du premier ACS (104), les secondes informations de configuration comprennent des informations de rôle du second ACS (104), les informations de rôle sont utilisées pour indiquer si l'ACS (104) est un ACS maître (104) ou un ACS esclave (104), et le procédé comprend en outre :
la réception, par le CPE (102), des premières informations de configuration provenant du premier ACS (104) ;
la réception, par le CPE (102), des secondes informations de configuration provenant du second ACS (104) ; et
le traitement, par le CPE (102), des premières informations de configuration sur la base des informations de rôle.

3. Procédé selon l'une quelconque des revendications 1 et 2, dans lequel le premier ACS (104) est un ACS maître (104), le second ACS (104) est un ACS esclave (104), les premières informations de configuration sont des informations de configuration de sécurité, et les secondes informations de configuration sont des informations de configuration de service.

4. Procédé de gestion de configuration d'équipement de locaux d'abonné, comprenant :
l'établissement, par un premier serveur de configuration automatique, ACS (104), d'une connexion de session à un équipement de locaux d'abonné, CPE (102), et l'envoi de premières informations de configuration, dans lequel les premières informations de configuration sont un paramètre configuré par le premier ACS sur la base d'un premier modèle de données et dans lequel les premières informations de configuration sont utilisées pour configurer le CPE (102) afin qu'il soit adapté pour activer un second ACS (104), pour être un dispositif qui traite simultanément les données d'une pluralité d'ACS et pour être adapté pour réaliser simultanément des opérations de gestion de configuration du premier ACS (104) et du second ACS (104), le premier ACS (104) est un ACS maître (104) et le second ACS (104) est un ACS esclave (104) ; et
la communication, par le premier ACS (104), avec le CPE (102).

5. Procédé selon la revendication 4, dans lequel les premières informations de configuration sont des informations de configuration de sécurité.

6. Procédé selon la revendication 4 ou 5, dans lequel le premier modèle de données est un modèle de données basé sur un protocole non TR069.

7. Appareil de gestion de configuration d'équipement de locaux d'abonné (500 ; 600), comprenant une unité de réception et une unité de traitement (520), dans lequel
l'unité de réception est configurée pour : établir une connexion de session à un premier serveur de configuration automatique, ACS (104), dans lequel le premier ACS (104) est un ACS maître (104), et recevoir des premières informations de configuration envoyées par le premier ACS (104), dans lequel les premières informations de configuration sont un paramètre configuré par le premier ACS (104) sur la base d'un premier modèle de données, dans lequel le premier modèle de données est un modèle de données basé sur un protocole non TR069 ;
l'unité de réception est en outre configuré pour : établir une connexion de session à un second ACS (104), dans lequel le second ACS (104) est un ACS esclave (104), et recevoir des secondes informations de configuration envoyées par le second ACS (104), dans lequel les secondes informations de configuration sont un paramètre configuré par le second ACS (104) sur la base d'un second modèle de données, dans lequel le second modèle de données est un modèle de données basé sur un protocole TR069 ; et l'unité de traitement (520) est configurée pour réaliser des opérations de gestion de configuration des premières informations de configuration et des secondes informations de configuration,
**caractérisé en ce que** :
avant que l'appareil (500 ; 600) n'établisse la connexion de session avec le second ACS (104) et ne reçoive les secondes informations de configuration envoyées par le second ACS (104), l'unité de traitement (520) est en outre configurée pour :
activer le second ACS (104) sur la base des premières informations de configuration.

8. Appareil (500 ; 600) selon la revendication 7, dans lequel les premières informations de configuration comprennent des informations de rôle du premier ACS (104), les secondes informations de configuration comprennent des informations de rôle du second ACS (104), et les informations de rôle sont utilisées pour indiquer si l'ACS (104) est un ACS maître (104) ou un ACS esclave (104),
l'unité de réception est en outre configurée pour recevoir les premières informations de configuration en provenance du premier ACS (104) et recevoir les secondes informations de configuration en provenance du second ACS (104) ; et
l'unité de traitement (520) est en outre configurée pour traiter les premières informations de configuration sur la base des informations de rôle.

9. Appareil (500 : 600) selon l'une quelconque des revendications 7 et 8, dans lequel le premier ACS (104) est un ACS maître (104), le second ACS (104) est un ACS esclave (104), les premières informations de configuration sont des informations de configuration de sécurité, et les secondes informations de configuration sont des informations de configuration de service.

10. Appareil de gestion de configuration d'équipement de locaux d'abonné (700 ; 800), comprenant une unité d'envoi et une unité de traitement (720), dans lequel
l'unité d'envoi est configurée pour : établir une connexion de session à un équipement de locaux d'abonné, CPE (102), et envoyer des premières informations de configuration, dans lequel les premières informations de configuration sont un paramètre configuré par le premier ACS sur la base d'un premier modèle de données et dans lequel les premières informations de configuration sont utilisées pour configurer le CPE (102) afin qu'il soit adapté pour activer un second ACS (104), pour être un dispositif qui traite simultanément les données d'une pluralité d'ACS et pour être adapté pour réaliser simultanément des opérations de gestion de configuration d'un premier serveur de configuration automatique, ACS (104), et du second ACS (104), le premier ACS (104) correspondant à l'appareil (700 ; 800) est un ACS maître (104) et le second ACS (104) est un ACS esclave (104) ; et
l'unité de traitement (720) est configurée pour communiquer avec le CPE (102) à l'aide de l'unité d'envoi.

11. Appareil (700 ; 800) selon la revendication 10, dans lequel les premières informations de configuration sont des informations de configuration de sécurité.

12. Appareil (700 ; 800) selon la revendication 10 ou 11, dans lequel le premier modèle de données est un modèle de données basé sur un protocole non TR069.

13. Système de communication, dans lequel le système de communication comprend l'appareil (500 ; 600) selon l'une quelconque des revendications 7 à 9 et l'appareil (700 ; 800) selon l'une quelconque des revendications 10 à 12.

14. Support de stockage lisible par ordinateur, dans lequel le support de stockage lisible par ordinateur stocke un programme informatique, et lorsque le programme informatique est exécuté par un processeur (610) dans un équipement de locaux d'abonné, CPE (102), le processeur (610) est capable de mettre en œuvre le procédé selon l'une quelconque des revendications 1 à 3.

15. Support de stockage lisible par ordinateur, dans lequel le support de stockage lisible par ordinateur stocke un programme informatique ; et lorsque le programme informatique est exécuté par un processeur (810) dans un serveur de configuration automatique, ACS (104), le processeur (810) est capable de mettre en œuvre le procédé selon l'une quelconque des revendications 4 à 6.
